# EUROPEAN PATENT SPECIFICATION

(11) **EP 1 585 085 B1**
(45) Date of publication and mention of the grant of the patent: **15.08.2012**
(21) Application number: 04105205.1
(22) Date of filing: 21.10.2004
(51) Int. Cl.: G08G 5/00, G01S 13/91, G01S 13/72

(54) **Data compression method, distributed single integrated picture platform and network using it**
Datenkompressionsverfahren, einzige integrierte Bildverteilungsplattform und diese verwendendes Netzwerk
Méthode de compression de données, plat-forme d'image intégrée unique répartie et réseau utilisant une telle plat-forme

(30) Priority: 14.11.2003 NL 1024782
(43) Date of publication of application: 12.10.2005
(73) Proprietor: THALES NEDERLAND B.V., 7550 GD Hengelo (NL)
(72) Inventor: DE WAARD, Huub, 94117, ARCUEIL (FR)
(74) Representative: Lucas, Laurent Jacques

(56) References cited:
- US-A- 3 223 996
- US-A- 4 855 932
- US-A- 5 138 321
- US-A- 5 471 433
- US-A- 5 842 156
- US-B1- 6 445 344

## Description

This invention relates to distributed single integrated picture method, platform and network for tracking moving objects. More particularly, this invention is adapted to create and maintain a Single Integrated Air Picture (SIAP) by each platform in the distributed network.

A network of distributed platform is assumed to be available, each equipped with a processing node and a number of collocated or non collocated sensors. Each of the platforms can receive information from the different other platforms. The objective of each platform in the distributed system is to reconstruct an identical copy of the Single Integrated Air Picture (SIAP) containing estimated, uniquely labelled composite trajectories of the different aircraft and missiles which are flying in the airspace covered by the different sensors. A composite trajectory contains local measurement information and information received from other platforms.

Since the end of the Cold War, peace keeping operations have become normal international practice. Furthermore, an enormous proliferation of modern weapons technology has occurred at the same time. The consequence is that in actual and future naval operation areas a large number of stealth targets are expected to be deployed. The result is that the available reaction time for a single air defence platform a against a threat has been reduced significantly, resulting in a limited battle space to engage those targets. For a task force the battle space can be effectively enlarged by distribution of all available sensor based information to each member. The result is a distributed platform data fusion system where each platform has a complete overview of the battle space covered by all available sensors.

One possible solution is an approach where the different platforms exchange all non filtered measurements. Each participant creates the same picture of the hostile environment.

Following this principle, the Cooperative Engagement Capability has been developed for military purposes. The Cooperative Engagement Capability (CEC) system is described in 'The Cooperative Engagement Capability', John Hopkins APL Technical Digest, Volume 16, Number 4(1995).

The Cooperative Engagement Capability (CEC) system is a distributed naval air defence system in which every contributing platform distributes all raw sensor measurements from the onboard sensor systems to provide each platform with the possibility to generate an identical copy of the Single Integrated Air Picture (SIAP).

A major disadvantage of this solution is that each platform has to process all available data. In terms of CPU-time, the cost can be very high. Very large delays possibly occur with the result that the compiled picture is unacceptable delayed compared to hostile developments in the real world. Furthermore, there is also a risk that the bandwidth of the available communication channels is exceeded which means that the transmission of measurements can be significantly delayed. This could mean that not all platforms in the task force can retrieve the measurements collected at a certain time interval at the same time, resulting in different global compiled pictures produces by each platform which can show large variations in track accuracy, continuity and label consistency. Thereby, the timely availability of the Single Integrated Air Picture (SIAP) is influenced.

In the Cooperative Engagement Capability (CEC) system where all raw measurements are distributed and processed by each platform, the problems are the followings:
1. There is no guarantee that each platform produces and maintains the same copy of the Single Integrated Air Picture (SIAP);
2. In cases of loss of data in the network, it is not possible that the same unique trajectory labels are assigned to trajectories correspondi ng with the same aircraft or missile;
3. The system is only limited upwards scalable in the number of platforms/sensors.

The US patent No 5,842,156 discloses a multiresolution and multirate approach for detecting and following targets, which has at least some of the above-mentioned drawbacks.

This invention solves the above-mentioned drawbacks by firstly, dynamical reduction and eventually furthermore compressing the data in an artificial measurement.

An object of this invention is a data compression method adapted for tracking system comprising :
the reception of locally acquired data,
the prediction of trajectory from these locally acquired data,
the calculation of short tracks from these locally predicted trajectories,
a dynamical reduction of the short track calculation and/or distribution.

The dynamical reduction could comprise an update of the short tracks only if predicted trajectory deviates from a predetermined value from an estimated local trajectory or if predicted trajectory accuracy becomes larger than a predetermined accuracy threshold.

Another embodiment of this invention is the above data compression method comprising an artificial measurement computation from each short track, said short track comprising a vector and a covariance matrix.

A further object of this invention is a distributed single integrated picture platform comprising :
at least a collocated sensor,
a receiving unit for receiving short tracks from other platforms, and
at least a processing node using the above data compression method and generating the single integrated picture from the received short tracks and sensor measurements.

Moreover, another object of this invention is a distributed single integrated picture network comprising at least two of these distributed single integrated picture platforms.
Figure 1, a schematic view of the dynamical reduction of the data compression method according to the invention,
Figure 2, a schematic view of the artificial measurement of the data compression method according to the invention.

In the proposed solution according to the invention, each platform has a processing node which can receive measurements or short tracks from other platforms. The short track is a track for an object based only on the most recent measurements. Thus, the short track concentrates several measurements.

A short track is computed in such way that its errors are not cross correlated with the errors of any other data in the system for the same target. Thus, each short track is independent of the other short tracks calculated solving the correlation problems.

Moreover, the short tracks can be calculated in order to be able to be processed as a real sensor measurement to produce a trajectory, so the received short tracks can be directly used to form the composite trajectory.

The short tracks ST can be calculated using extended Kalman filter technology. The processing is then based on Multiple Hypothesis Tracking as described in 'A new concept for Task Force Data Fusion' written by H.W. de Waard and W. Elgersma published in Signal and Data Processing of Small Targets 2001 proceedings.

Even, if by transmitting short tracks, the bandwidth occupation and/or the global distributed system computation is already reduced compared to full non collocated sensor measurements distribution, this reduction is not always sufficient.

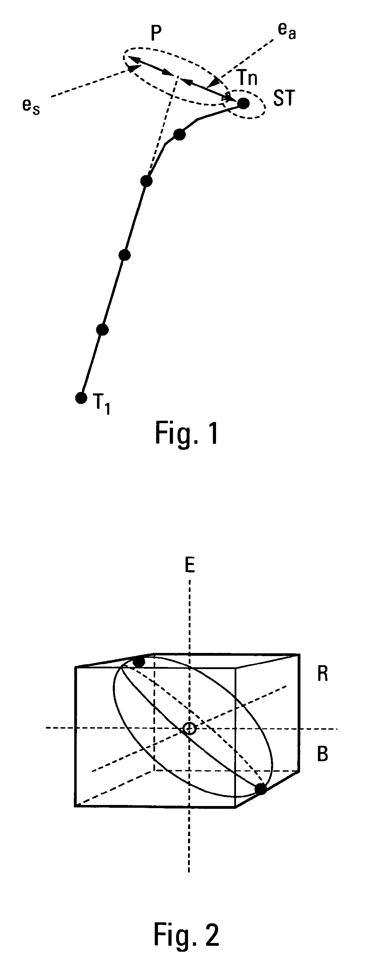

Figure 1 shows the basic idea behind dynamical reduction of the short track. In the figure, the estimated local trajectory ST based on the local platform sensor measurements S₁... Sₙ and the prediction of this trajectory P from the last time a short track ST has been calculated are shown.

If the statistical error eₛ or the systematical error eₐ becomes larger than pre set threshold values a new short track ST is calculated and/or distributed. A measure for the statistical errors involved is determined by ratio of the volumes of the required predicted and estimated accuracy volume (ellipsoids in this example). A measure for the systematical errors involved is determined by the difference in position between the predicted and the estimated trajectory in state space.

The black points of Figure 1 show a local trajectory update at one platform. For each local trajectory a prediction P is calculated from the last time a short track ST has been calculated. A new short track is only calculated and/or distributed if the prediction P deviates too much from the estimated local trajectory or if it becomes too inaccurate compared with preset thresholds.

Figure 2 shows the transformation from a short track ST to an artificial measurement AM. In our example, the short track comprise a vector (position, velocity, acceleration) and a covariance matrix containing the accuracy information. This covariance matrix is used to determine a volume which contains the probable but unknown positions of the real target expressed in coordinates (Range R, Bearing B and Epsilon E in our example). The dimension of the covariance matrix is N, N is equal to 9 in this example.

In figure 2, this volume is an ellipsoid. The volume is approximated by a simpler volume (i.e. defined by a matrix whose dimension K is less than N), a cube in this example.

The approximation volume may be defined as having a surface comprising the minimum and maximum points (black points of figure 1) of the volume to approximate. The KxK accuracy matrix could be defined as a matrix with only non zero elements on the diagonal (3 non zeros elements in the case of the cube).

Due to the fact that the artificial measurement AM is distributed instead of the m associated measurements used for calculating the short track, the amount of data is reduced by a factor m. With respect to the distribution of not correlated raw sensor measurements, even for lower m values a significant reduction is produced.

Due to the two steps compression data : artificial measurement and dynamical reduction (alone or in combination), the amount of information to be distributed is much smaller compared with the situation that not correlated raw sensor measurements are distributed.

Another application to the distributed single picture compilation method may be surveillance of any kind of space : not only air space but also over sea or under sea, or land space...

More generally, such distributed single integrated picture compilation method may be used to monitor a space for military or civilian reasons: battle space management, airport space management, cost monitoring for rescue management, nature (e.g. seismic) monitoring for space clearing management...

## Claims

1. A data compression method adapted for distributing sensor measurement data through a network of platforms, each platform comprising a system for tracking targets from sensor measurement data, each tracking system:
- predicting trajectories (P) of targets from measurement data acquired from a collocated sensor, and;
- calculating a short track (ST) from each predicted trajectory, the short track being only based on the most recent measurement data in the trajectory, and;
- distributing short tracks to other platforms through the network;
the method being **characterised in that**:
- a short track is updated and/or distributed only if its predicted trajectory deviates more than a predetermined value from an estimated local trajectory, or;
- a short track is updated and/or distributed only if its predicted trajectory accuracy becomes larger than a predetermined accuracy threshold.

2. Data compression method according to any of the preceding claims **characterised in that** the update comprises the calculation of a short track from the locally predicted trajectory.

3. Data compression method according to any of the preceding claims **characterised in that** it comprises an artificial measurement computation from each short track, said short track comprising a vector and a covariance matrix.

4. Data compression method according to the preceding claim **characterised in that** the artificial measurement computation comprises a computation of a probable object 3D position and an approximation of the volume defined by the covariance matrix by an 3x3 accuracy matrix corresponding to a cube approximation.

5. Data compression method according to any of the preceding claims **characterised in that** the geometric representation of the covariance matrix is an ellipse whose minimum and maximum are points of the cube surface defined by the 3x3 accuracy matrix.

6. Data compression method according to the preceding claim **characterised in that** the update comprises the calculation of artificial measurement.

7. Data compression method according to any of the preceding claims **characterised in that** the update comprises the distribution of the short track or artificial measurement.

8. Distributed single integrated picture platform comprising :
at least a collocated sensor,
a receiving unit for receiving short tracks from other platforms, and
at least a processing node using data compression method according to any of the preceding claims, and generating the single integrated picture from the received short tracks and sensor measurements.

9. Distributed single integrated picture network comprising at least two of the distributed single integrated picture platforms according to the preceding claim.

## Patentansprüche

1. Datenkomprimierungsverfahren, eingerichtet zum Verteilen von Sensormessdaten über ein Netzwerk von Plattformen, wobei jede Plattform ein System zum Verfolgen von Zielen anhand von Sensormessdaten umfasst, wobei jedes Verfolgungssystem:
- Trajektorien (P) von Zielen anhand von Messdaten vorhersagt, die von einem am gleichen Ort befindlichen Sensor erfasst werden; und
- eine Kurzbahn (ST) aus jeder vorhergesagten Trajektorie berechnet, wobei die Kurzbahn nur auf den jüngsten Messdaten in der Trajektorie beruht; und
- Kurzbahnen über das Netzwerk auf andere Plattformen verteilt;
wobei das Verfahren **dadurch gekennzeichnet ist, dass**:
- eine Kurzbahn nur dann aktualisiert und/oder verteilt wird, wenn ihre vorhergesagte Trajektorie um mehr als einen vorbestimmten Wert von einer geschätzten lokalen Trajektorie abweicht; oder
- eine Kurzbahn nur dann aktualisiert und/oder verteilt wird, wenn ihre vorhergesagte Trajektoriengenauigkeit größer als ein vorbestimmter Genauigkeitsschwellwert wird.

2. Datenkomprimierungsverfahren nach dem vorhergehenden Anspruch, **dadurch gekennzeichnet, dass** die Aktualisierung die Berechnung einer Kurzbahn aus der lokal vorhergesagten Trajektorie umfasst.

3. Datenkomprimierungsverfahren nach einem der vorhergehenden Ansprüche, **dadurch gekennzeichnet, dass** es eine künstliche Messungsberechnung aus jeder Kurzbahn umfasst, wobei die Kurzbahn einen Vektor und eine Kovarianzmatrix umfasst.

4. Datenkomprimierungsverfahren nach dem vorhergehenden Anspruch, **dadurch gekennzeichnet, dass** die künstliche Messungsberechnung eine Berechnung einer wahrscheinlichen 3D-Position des Objekts und eine Näherung des durch die Kovarianzmatrix definierten Volumens durch eine 3x3-Genauigkeitsmatrix, die einer Würfelnäherung entspricht, umfasst.

5. Datenkomprimierungsverfahren nach einem der vorhergehenden Ansprüche, **dadurch gekennzeichnet, dass** die geometrische Darstellung der Kovarianzmatrix eine Ellipse ist, deren Minimum und Maximum Punkte der durch die 3x3-Genauigkeitsmatrix definierten Würfeloberfläche sind.

6. Datenkomprimierungsverfahren nach dem vorhergehenden Anspruch, **dadurch gekennzeichnet, dass** die Aktualisierung die Berechnung einer künstlichen Messung umfasst.

7. Datenkomprimierungsverfahren nach einem der vorhergehenden Ansprüche, **dadurch gekennzeichnet, dass** die Aktualisierung die Verteilung der Kurzbahn oder der künstlichen Messung umfasst.

8. Verteilte Plattform für einzige integrierte Bilder, umfassend:
mindestens einen am gleichen Ort befindlichen Sensor,
eine Empfangseinheit zum Empfangen von Kurzbahnen von anderen Plattformen, und
mindestens einen Verarbeitungsknoten, der das Datenkomprimierungsverfahren nach einem der vorhergehenden Ansprüche verwendet und das einzige integrierte Bild aus den empfangenen Kurzbahnen und Sensormessungen erzeugt.

9. Verteiltes Netzwerk für einzige integrierte Bilder, das mindestens zwei der verteilten Plattformen für einzige integrierte Bilder nach dem vorhergehenden Anspruch umfasst.

## Revendications

1. Procédé de compression de données adapté pour distribuer des données de mesure de capteur sur un réseau de plateformes, chaque plateforme comprenant un système permettant de suivre des cibles à partir de données de mesure de capteur, chaque système de suivi :
- prédisant des trajectoires (P) de cibles à partir de données de mesure acquises à partir d'un capteur colocalisé ; et
- calculant une piste courte (ST) à partir de chaque trajectoire prédite, la piste courte étant uniquement basée sur les données de mesure les plus récentes dans la trajectoire ; et
- distribuant des pistes courtes à d'autres plateformes à travers le réseau,
le procédé étant **caractérisé en ce que** :
- une piste courte est mise à jour et/ou distribuée uniquement si sa trajectoire prédite s'écarte de plus qu'une valeur prédéterminée d'une trajectoire locale estimée ; ou
- une piste courte est mise à jour et/ou distribuée uniquement si la précision de sa trajectoire prédite devient supérieure à un seuil de précision prédéterminé.

2. Procédé de compression de données selon l'une quelconque des revendications précédentes, **caractérisé en ce que** l'étape de mise à jour comprend l'étape consistant à calculer une piste courte à partir de la trajectoire prédite localement.

3. Procédé de compression de données selon l'une quelconque des revendications précédentes, **caractérisé en ce qu'**il comprend un calcul de mesure artificielle à partir de chaque piste courte, ladite piste courte comprenant un vecteur et une matrice de covariance.

4. Procédé de compression de données selon la revendication précédente, **caractérisé en ce que** le calcul de mesure artificielle comprend un calcul d'une position tridimensionnelle d'objet probable et une approximation du volume défini par la matrice de covariance, par une matrice de précision 3 x 3 correspondant à une approximation cubique.

5. Procédé de compression de données selon l'une quelconque des revendications précédentes, **caractérisé en ce que** la représentation géométrique de la matrice de covariance est une ellipse dont le minimum et le maximum sont des points de la surface de cube définie par la matrice de précision 3x3.

6. Procédé de compression de données selon la revendication précédente, **caractérisé en ce que** l'étape de mise à jour comprend l'étape consistant à calculer une mesure artificielle.

7. Procédé de compression de données selon l'une quelconque des revendications précédentes, **caractérisé en ce que** l'étape de mise à jour comprend l'étape consistant à distribuer la mesure de piste courte ou la mesure artificielle.

8. Plateforme d'image intégrée unique distribuée, comprenant :
au moins un capteur colocalisé ;
une unité de réception pour recevoir des pistes courtes provenant d'autres plateformes ; et
au moins un noeud de traitement utilisant le procédé de compression de données selon l'une quelconque des revendications précédentes, et générant l'image intégrée unique à partir des pistes courtes reçues et des mesures de capteur.

9. Réseau d'images intégrées uniques distribuées comprenant au moins deux des plateformes d'image intégrée unique distribuée selon la revendication précédente.
